# EUROPÄISCHE PATENTSCHRIFT

(11) **EP 1 033 307 B1**
(45) Veröffentlichungstag und Bekanntmachung des Hinweises auf die Patenterteilung: **22.12.2004**
(21) Anmeldenummer: 00101151.9
(22) Anmeldetag: 21.01.2000
(51) Int. Cl.: B65B 35/44, B65B 51/14, B65G 47/31

(54) **Verfahren und Vorrichtung zum Handhaben von (Zigaretten-) Packungen**
Method and device for handling (cigarette) packs
Procédé et dispositif pour manipuler des paquets (de cigarettes)

(30) Priorität: 03.03.1999 DE 19909161
(43) Veröffentlichungstag der Anmeldung: 06.09.2000
(60) Teilanmeldung: 04007311.6
(73) Patentinhaber: Focke & Co. (GmbH & Co. KG), 27283 Verden (DE)
(72) Erfinder: Focke, Heinz, 27283 Verden (DE); Häfker, Thomas, 27299 Langwedel-Etelsen (DE); Köster, Johann, 27283 Verden (DE)
(74) Vertreter: Bolte, Erich, Dipl.-Ing.

(56) Entgegenhaltungen:
- GB-A- 941 490
- US-A- 4 843 800

## Beschreibung

Die Erfindung betrifft ein Verfahren zum Handhaben von Packungen bei der Herstellung von Gebindepackungen für Packungsgruppen, die durch Absondern von einem fortlaufenden Packungsstrang aus in Dichtlage positionierten Packungen gebildet werden, wobei die Packungsgruppe von dem nachfolgenden Packungsstrang durch Relativbewegung abgesondert wird, derart, dass zwischen der Packungsgruppe und dem Packungsstrang eine Lücke gebildet ist und dass die Packungsgruppe sodann abgefördert, insbesondere in Querrichtung abgeschoben wird. Weiterhin betrifft die Erfindung Vorrichtungen zur Durchführung des Verfahrens.

Gebindepackungen bestehen aus einer üblicherweise von einer Außenumhüllung umgebenden Packungsgruppe. Bei Gebinden aus Zigarettenpackungen besteht die Packungsgruppe beispielsweise aus zehn Zigarettenpackungen, die in zwei Reihen übereinander liegen. Die Packungsgruppe wird dadurch gebildet, dass ein fortlaufender Packungsstrang aus dicht aneinanderliegenden (Zigaretten-)Packungen zugeführt und durch Querabschub die Packungsgruppe abgesondert wird. Diese wird dann einer Verpackungsstation zum Verpacken in die Außenumhüllung zugeführt.

Die zunehmende Leistungsfähigkeit von Verpackungsmaschinen, insbesondere der Zigarettenpacker, erfordert Maßnahmen für höhere Leistungen eines Gebindepackers bzw. weiterer an eine Verpackungsmaschine anschließender Förderund Handhabungsaggregate für die Packungen, ohne dass diese unerwünschten mechanischen Belastungen ausgesetzt sind.

In der GB 941 490 ist ein Verfahren zur Bildung von Packungsgruppen als Inhalt einer Gebindepackung offenbart. Dort wird eine Dichtreihe von Packungen durch einen aktiven Schieber auf den Förderer entgegen der Förderbewegung zurückgeschoben, und zwar in den Bereich von Klemmbacken. Diese Klemmbacken halten die zu separierende Packungsgruppe mechanisch unter Überwindung der Förderkraft des Förderbandes. Bei diesem Verfahren wird nachteiligerweise ein besonders starker Druck auf die Packungen ausgeübt.

Der Erfindung liegt die Aufgabe zugrunde, Maßnahmen für die Handhabung von (Zigaretten-)Packungen im Anschluss an die Verpackungsmaschine, nämlich insbesondere bei der Herstellung von Gebindepackungen, vorzuschlagen, die eine höhere Leistung, also größere Arbeitsgeschwindigkeit bei Vermeidung insbesondere mechanischer Beanspruchung der Packungen ermöglichen.

Zur Lösung dieser Aufgabe ist das erfindungsgemäße Verfahren dadurch gekennzeichnet, dass die Packungsgruppe einerseits und der Packungsstrang andererseits durch Rückbewegung des Packungsstrangs entgegen der Förderbewegung in Förderrichtung auseinander bewegt werden.

Die erfindungsgemäße Vorrichtung ist ein Auspruch 4 definiert.

Der Erfindung liegt die Erkenntnis zugrunde, dass der Querschub von Packungsgruppen von einem zugeförderten Packungsstrang aus in Dichtlage angeordneten Packungen problematisch ist. Es wird durch die Relativbewegung zunächst die Packungsgruppe freigestellt und dann abgeschoben.

Gemäß einem weiteren Merkmal der Erfindung wird der Packungsstrang entgegen der Förderrichtung zurückbewegt, und zwar unter Bildung eines größeren Abstands von der Packungsgruppe. Durch den größeren Abstand kann der Packungsstrang in Richtung auf die Abschubposition bereits beschleunigt werden, wenn ein quer wirkender Abschieber noch in der Rückkehrbewegung ist. Die Leistung der Einrichtung wird dadurch erhöht ohne Beeinträchtigung der Packungen.

Ein anderes, besonderes Thema ist die Siegelung von Zigarettenpackungen, insbesondere einer Außenumhüllung derselben aus siegelfähiger Folie. Der Abschubstation der Packungsgruppen ist eine Siegelstation bzw. ein Siegelaggregat vorgeordnet. Im Bereich desselben werden die Packungen einzeln bzw. paarweise übereinanderliegend durch einen Taschenförderer transportiert, der je eine einzelne Zigarettenpackung oder zwei übereinanderliegende aufnimmt. Seitliche Siegelorgane sind in besonderer Weise ausgebildet und zur Siegelung von seitwärts gerichteten Stirn- und Bodenflächen vorgesehen.

Weitere Merkmale der Erfindung beziehen sich auf die Ausgestaltung und Arbeitsweise von Förderorganen für (Paare) von (Zigaretten-)Packungen, des Packungsstrangs sowie des Siegelaggregats.

Weitere Einzelheiten der Erfindung werden nachfolgend anhand der Zeichnungen näher erläutert. Es zeigt:

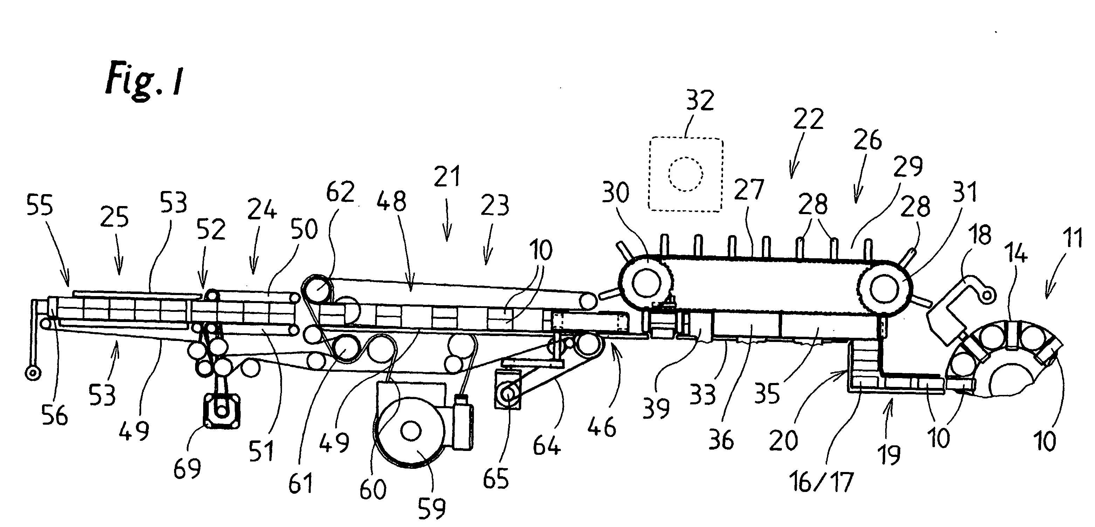

- Fig. 1: eine Vorrichtung für die Handhabung von (Zigaretten-)Packungen in Seitenansicht,
- Fig. 2: einen Teilbereich der Vorrichtung gemäß Fig. 1, nämlich ein Siegelaggregat, in vergrößertem Maßstab,
- Fig. 3: die Einzelheit der Fig. 2 mit zusätzlich dargestellten Siegelorganen,
- Fig. 4 bis Fig. 6: Einzelheiten der Darstellung in Fig. 3, nämlich Querschnitte in den Schnittebenen IV, V und VI, in vergrößertem Maßstab,
- Fig. 7: einen Bereich der Vorrichtung gemäß Fig. 1 im Anschluss an die Siegelstation, in vergrößertem Maßstab,
- Fig. 8: die Einzelheit gemäß Fig. 7 bei veränderter Position von Förderorganen,
- Fig. 9: eine Einzelheit im Bereich der Siegelstation im Querschnitt derselben, bei stark vergrößertem Maßstab.

Bei den in den Zeichnungen dargestellten Packungen 10 handelt es sich um quaderförmige Zigarettenpackungen. Diese kommen von einer Verpackungsmaschine. Von dieser ist ein Faltrevolver 11 gezeigt, in dessen Bereich die Packungen 10 mit einer Außenumhüllung aus einer (siegelbaren) Folie versehen werden. Die Packungen 10 bestehen aus einander gegenüberliegender Vorderwand 12, Rückwand 13, schmalen langgestreckten Seitenwänden 14 und 15 sowie kleinen Stirnwänden 16 und 17 bzw. Stirnwand und Bodenwand. Im Bereich des Faltrevolvers 11 werden einander überdeckende Seitenlappen der Außenumhüllung im Bereich einer radial nach außen gerichteten Seitenwand 14 durch Siegeln miteinander verbunden, und zwar durch ein schwenkbares Siegelorgan 18.

Die soweit vorbereiteten Packungen 10 werden in Radialrichtung entlang einer horizontalen Mittelebene des Faltrevolvers 11 aus diesem ausgeschoben in eine Packungsbahn 19. An diese schließt ein Aufrechtförderer 20 an, der die Packungen an eine horizontale Förderstrecke 21 übergibt. Im Bereich dieser Förderstrecke 21 werden die Packungen 10 in kleinen Gruppen gefördert, nämlich mit je zwei übereinander angeordneten Packungen 10. Diese liegen dabei mit Vorderwand 12 und Rückwand 13 aneinander. Die Seitenwände 14, 15 erstrecken sich quer zur Förderrichtung. Die Stirnwände 16 und 17 sind seitwärts gerichtet.

Im Bereich der Förderstrecke 21 gelangen die Packungen 10 zuerst in ein Siegelaggregat 22 zum Siegeln der Außenumhüllung im Bereich der seitwärts gerichteten Stirnwände 16, 17. Danach werden die Packungen 10 von einem Zwischenförderer 23 übernommen. Es folgt ein Stauförderer 24 und schließlich eine Abschubstation 25.

Der erste Abschnitt der Förderstrecke 21 ist als Taschenförderer 26 ausgebildet, als Teil des Siegelaggregats 22. Der Taschenförderer 26 besteht aus einem Endlosförderer, nämlich einem Zahnriemen 27 mit nach außen abstehenden Mitnehmern 28. Diese sind als quer abstehende Stege ausgebildet, die sich etwa über die Breite des Zahnriemens 27 erstrecken. Diese wiederum haben eine geringere Breite als die Packungen 10 quer zum Zahnriemen 27.

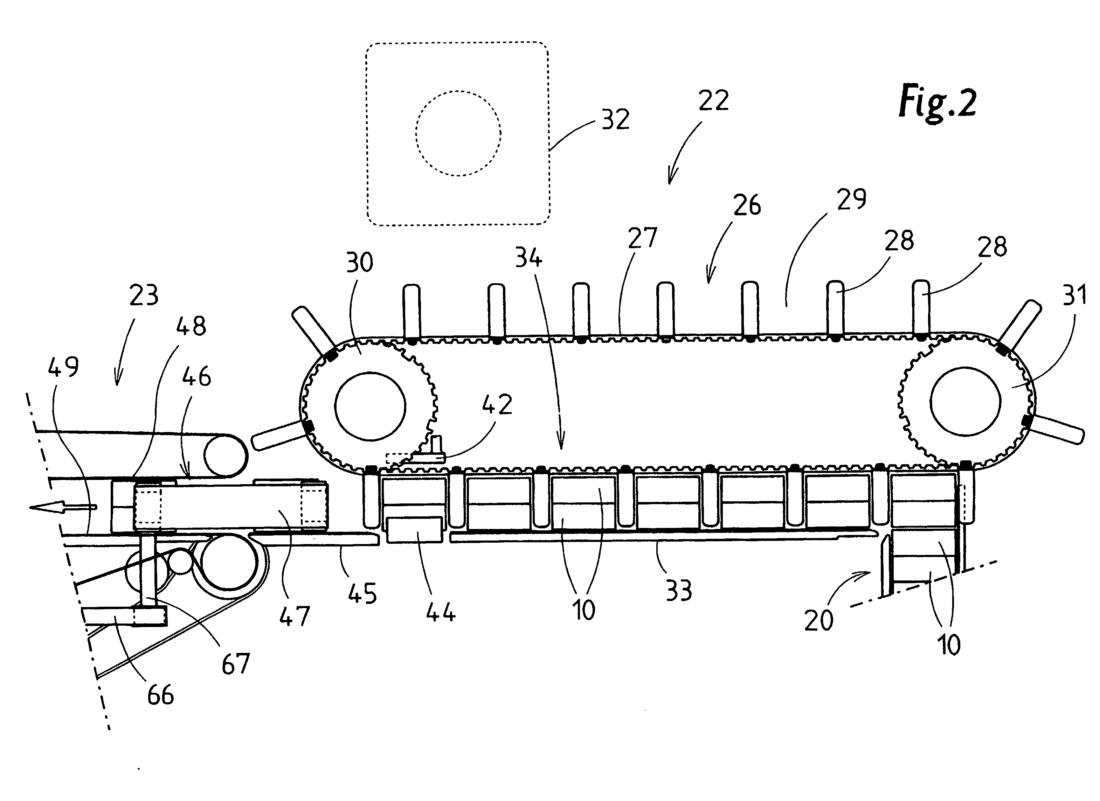

Zwei benachbarte Mitnehmer 28 bilden eine Tasche 29, in der zwei übereinander angeordnete Packungen 10 Aufnahme finden. Die Abmessung der Mitnehmer 28 senkrecht zum Zahnriemen 27 ist etwas geringer als die Abmessung der beiden übereinander angeordneten Packungen 10 (z.B. Fig. 2).

Der Zahnriemen 27 läuft über Zahnräder 30, 31, von denen ein Zahnrad, z.B. Zahnrad 30, angetrieben ist, und zwar durch einen Servomotor 32. Die Zahnräder 30, 31 als Umlenkorgane für den Zahnriemen 27 bewirken ein Öffnen und Schließen der Taschen 29. Dadurch ist es möglich, (zwei) Packungen 10 im Bereich des Aufrechtförderers 20 zu übernehmen, nämlich von einem hier gebildeten Stapel von Packungen 10 abzuschieben (z.B. Fig. 2). Der Taschenförderer 26 ist zu diesem Zweck oberhalb der Bewegungsbahn der Packungen 10 und oberhalb des Aufrechtförderers 20 positioniert. Die Packungen 10 werden auf einer horizontalen Unterlage 33 (gleitend) transportiert, und zwar infolge Mitnahme durch die aufeinanderfolgenden Mitnehmer 28, die je in eine Lücke zwischen aufeinanderfolgenden Zweiergruppen von Packungen 10 eintreten.

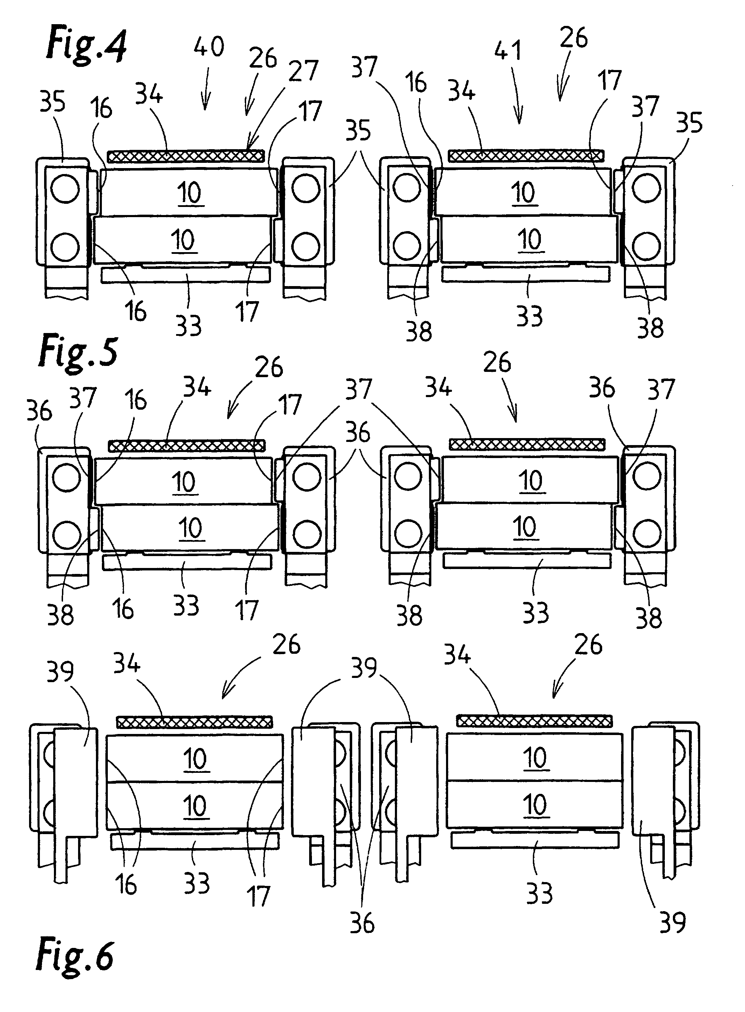

Die Packungen 10 werden vom Taschenförderer 26 im Bereich des Zahnrads 30 an den Zwischenförderer 23 übergeben und von diesem weitertransportiert. Im Bereich des Taschenförderers 26 findet eine Behandlung der Packungen 10 statt, und zwar eine Siegelung im Bereich der seitwärts gerichteten Stirnwände 16, 17. Zu diesem Zweck sind einem unteren Fördertrum 34 des Taschenförderers 26 Siegelorgane zugeordnet, nämlich plattenförmige Siegelbacken 35, 36. Es handelt sich dabei um plattenförmige, beheizte und druckbeaufschlagte Organe, die zu beiden Seiten der Bewegungsbahn der Packungen 10 positioniert sind (Fig. 4 und Fig. 5). Die Siegelbacken 35, 36 werden an die Stirnwände 16, 17 der Packungen 10 angedrückt. Die in Förderrichtung ersten Siegelbacken 35 sind so bemessen, dass sie den Bereich von drei Taschen 29, also von drei Paaren von Packungen 10 erfassen, während die zweiten Siegelbacken 36 sich über zwei Taschen 29 erstrecken. Der Taschenförderer 26 ist taktweise angetrieben, derart, dass die Siegelung während einer momentanen Stillstandsphase durchgeführt wird. Die Siegelbacken 35, 36 werden danach von den Stirnwänden 16, 17 zurückbewegt und der Taschenförderer 26 kann mit den Packungen 10 um eine Station, nämlich um das Maß einer Tasche 29, weiterbewegt werden. Es findet dann ein erneuter Siegeltakt statt, so dass die Packungen 10 über mehrere Takte hinweg nach und nach gesiegelt werden. Die Siegelbacken 35, 36 können je nach dem zu siegelnden Material unterschiedliche Temperaturen und/oder Siegelzeiten und/oder Andrückkräfte aufweisen.

Eine Besonderheit ist die Gestaltung von den Packungen 10 zugekehrten Siegelflächen der Siegelbacken 35, 36. Diese sind versetzt zueinander angeordnet, und zwar derart, dass obere und untere Siegelflächen 37, 38 je einer Stirnwand 16, 17 zugeordnet und gegeneinander versetzt sind. Die Siegelbacken 35, 36 auf den einander gegenüberliegenden Seiten sind mit korrespondierend ausgebildeten Siegelflächen 37, 38 versehen, so dass beim Andrücken der Siegelbacken 35, 36 an die Stirnwände 16, 17 die übereinanderliegenden Packungen 10 leicht gegeneinander verschoben werden (Fig. 4 und Fig. 5). Dadurch wird verhindert, dass beim Siegeln der Außenfolie die benachbarten Packungen 10 miteinander verbunden werden. Die Siegelflächen 37, 38 sind auch in Förderrichtung der Packungen 10 unterschiedlich, korrespondierend gestaltet, nämlich von Siegelbacken 35 zu Siegelbacken 36, derart, dass unterschiedliche Relativstellungen während des Siegelns in diesen Bereichen geschaffen werden.

Im Anschluss an die Siegelbacken 35, 36 werden die übereinander liegenden Packungen 10 in den Taschen 29 ausgerichtet, und zwar durch seitlich angeordnete, ebenfalls gegen die Stirnwände 16, 17 bewegbare Ausrichter 39.

Wie des weiteren aus Fig. 4, Fig. 5 und Fig. 6 ersichtlich, ist die Vorrichtung auf zweibahnige Betriebsweise ausgelegt mit den parallel nebeneinander laufenden, eigenständigen Bahnen 40, 41.

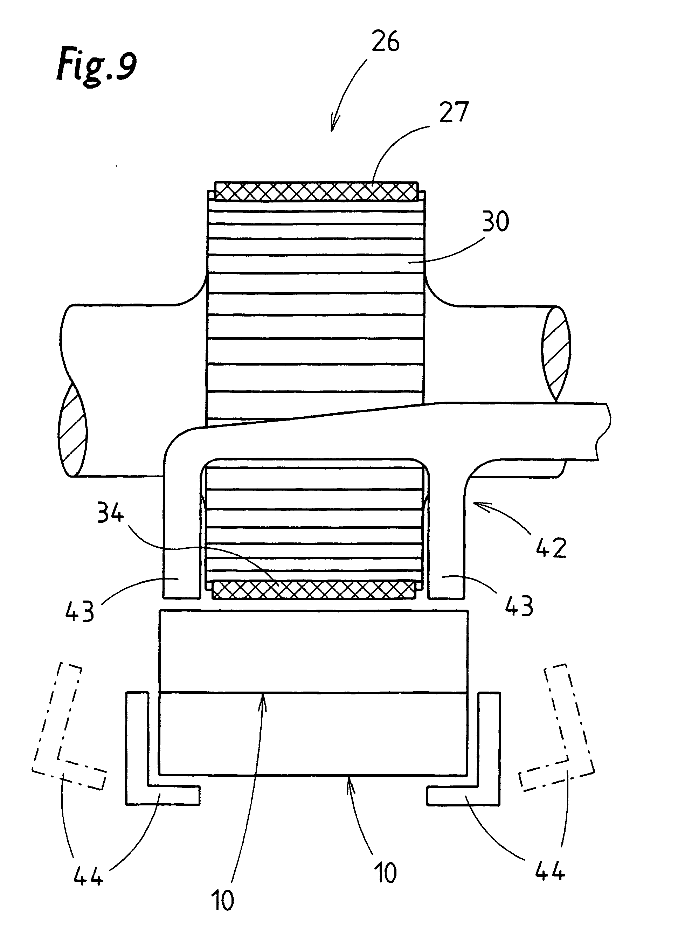

Benachbart zum Umlenkrad bzw. Zahnrad 30 ist ein Auswerfer 42 positioniert, oberhalb des Fördertrums 34. Der gabelförmige Auswerfer 42 sondert eventuell fehlerhafte Packungen 10 aus dem weiteren Förderprozess aus. Der Auswerfer 42 drückt zu diesem Zweck mit seitlich neben dem Zahnriemen 27 wirkenden Schenkeln 43 die Packungen 10 nach unten aus. Diese sind im Bereich des Auswerfers 42 unten durch bewegbare Tragorgane abgestützt, nämlich durch Tragschenkel 44, die zum Auswerfen von fehlerhaften Packungen 10 seitwärts bewegt werden (strichpunktiert in Fig. 9).

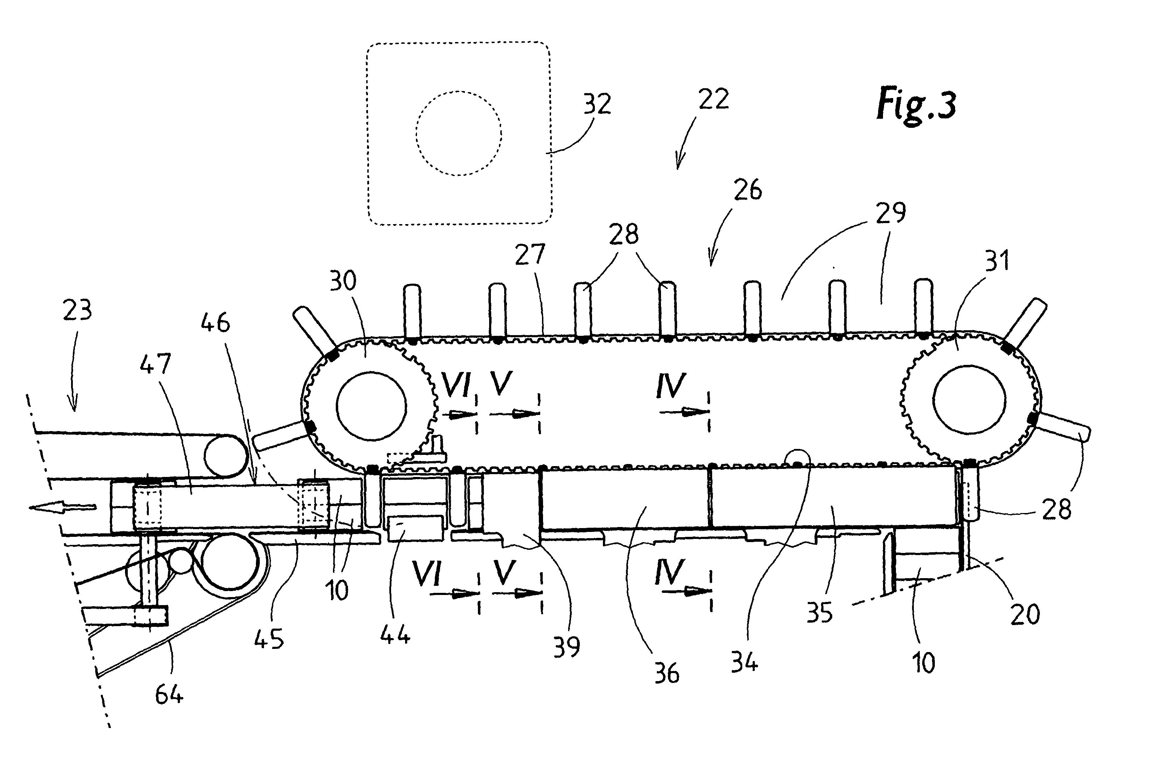

Die Packungen 10 werden von dem Taschenförderer 26 im Bereich des Zahnrads 30 auf einen Zwischenträger aufgeschoben, nämlich auf eine Brückenplatte 45. Im Bereich derselben werden die von einer Tasche 29 freigegebenen Packungen 10 von einem Übergabeförderer 46 erfasst. Dieser besteht aus zwei einander gegenüber liegenden, seitlichen Gurten 47. Die Packungen 10 gelangen in unveränderter Relativstellung in den Bereich zwischen den einander gegenüberliegenden Gurten 47 und werden - bei erhöhter Geschwindigkeit - weitergefördert. Die Übergabe der Packungen vom Taschenförderer 26 an den Übergabeförderer 46 erfolgt durch die Bewegung der Mitnehmer 28 längs eines Kreisbogens. Die Packungen werden vollständig in den Bereich des Übergabeförderers 46 eingefördert (Fig. 3).

Der Übergabeförderer 46 transportiert die Packungen 10 in den Bereich des Zwischenförderers 23, der aus einem Obergurt 48 und einem Untergurt 49 besteht. In diesem Bereich werden demnach die (zwei) Packungen 10 oben und unten, also im Bereich der großflächigen Vorderwände 12 und Rückwände 13, erfasst und weitertransportiert. Aufgrund der größeren Antriebsgeschwindigkeit des Übergabeförderers 46 sowie des Zwischenförderers 23 wird zwischen den aufeinanderfolgenden (Paaren von) Packungen ein größerer Abstand geschaffen.

Die Zweiergruppen der Packungen 10 werden von dem Zwischenförderer 23 an den ebenfalls aus einem Oberband 50 und einem Unterband 51 bestehenden Stauförderer übergeben. In diesem Bereich werden die Packungen 10 angestaut, so dass ein Packungsstrang 52 aus in Dichtlage aufeinander folgenden Packungen 10 gebildet wird, und zwar jeweils zwei ausgerichtet übereinander. Dieser durchgehende Packungsstrang 52 erstreckt sich bis in den Bereich der Abschubstation 25. In diesem Bereich werden die Packungen 10 durch einen Unterförderer 53 transportiert. An der Oberseite befindet sich eine Abdeckplatte 54.

Die Abschubstation 25 bzw. die Länge des Unterförderers 53 und der Abdeckplatte 54 entsprechen etwa der Länge einer abzuschiebenden Packungsgruppe 55 aus fünf Paaren von übereinander angeordneten Packungen 10. Der Stau bzw. der Packungsstrang 52 wird dadurch gebildet, dass die Packungen 10 gegen einen Endanschlag 56 gefördert werden. Dieser ist in Förderrichtung bewegbar durch Anordnung an einem Schwenkarm 57. Die vollständige Packungsgruppe 55 wird durch einen quer bewegbaren Abschieber 58 aus dem Bereich der Abschubstation 25 quer zur Förderrichtung herausbewegt.

Eine Besonderheit besteht darin, dass die abzuschiebende Packungsgruppe 55 vor dem Abschub von dem nachfolgenden Packungsstrang 52 abgesondert wird, so dass eine Lücke zwischen Packungsgruppe 55 und Packungsstrang 52 gegeben ist.

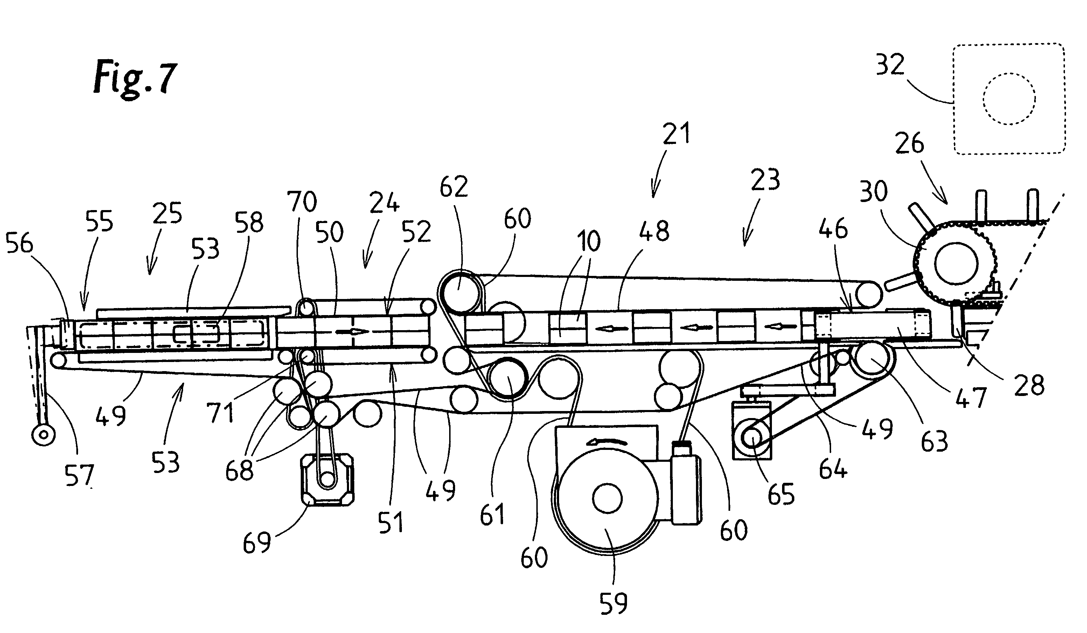

Die Absonderung der Packungsgruppe 55 vom Packungsstrang 52 wird durch mehrere Maßnahmen erreicht. Zum einen wird nach Anlage des Packungsstrangs 52 am Endanschlag 56 dieser in Förderrichtung weiterbewegt (strichpunktierte Position in Fig. 7), während der Packungsstrang 52 im Bereich des Stauförderers 24 angehalten wird. Dadurch entsteht eine erste Lücke.

Eine weitere wichtige Maßnahme ist eine Rückförderung des Packungsstrangs 52 durch entsprechend gegenläufigen Antrieb des Stauförderers 24 (Fig. 7). Der von der Packungsgruppe 55 abgeteilte Packungsstrang 52 wird in entgegengesetzter Richtung gefördert, und zwar unter Aufnahme von weiteren Paaren von Packungen 10 bis in den Bereich des Zwischenförderers 23. Dadurch wird zum einen der Packungsstrang 52 vergrößert und zum anderen eine verhältnismäßig große Lücke gegenüber der abzuschiebenden Packungsgruppe 55 geschaffen.

Der Abschubvorgang für die Packungsgruppe 55 und die Rückförderbewegung des Packungsstrangs 52 sind zeitlich überlagert. Von besonderer Wichtigkeit ist aber, dass der Packungsstrang 52 durch (erneute) Umkehr der Förderrichtung zur Abschubstation 25 gefördert werden kann, während sich der Abschieber 58 noch in der Rückkehrbewegung in die Ausgangsstellung befindet. Wenn dieser die Ausgangsstellung erreicht hat, kann der Packungsstrang 52 mit hoher bzw. maximaler Fördergeschwindigkeit in die Abschubstation 25 einlaufen, so dass eine beachtliche Zeitersparnis erzielt ist.

Die Förderorgane der Einrichtung sind in besonderer Weise angetrieben bzw. hinsichtlich des Antriebs und der Ausgestaltung aufeinander abgestimmt.

Der dem Taschenförderer 26 zugeordnete Servomotor 32 bewirkt den taktweisen Antrieb des Taschenförderers 26, bewegt aber auch über entsprechende Getriebe die Siegelbacken 35, 36 sowie den Ausrichter 39. Des weiteren wird der Auswerfer 42 von dem Servomotor 32 betätigt. Die Bewegungen werden über entsprechende Kurven gesteuert. Der Servomotor 32 wird von der Hauptmaschine gesteuert über einen Drehgeber (Inkrementalgeber). Die Maximalgeschwindigkeit des Taschenförderers 26 kann z.B. etwa 14 m/min. betragen.

Der Zwischenförderer 23 wird von einem eigenen Motor angetrieben, und zwar von einem Drehstrommotor 59. Dieser ist über einen Antriebsgurt 60 mit Antriebsrädern 61, 62 für den Obergurt 48 und Untergurt 49 des Zwischenförderers 23 verbunden. Der Drehstrommotor 59 läuft stets mit der Maximalgeschwindigkeit, z.B. von etwa 49,4 m/min. Der Antriebsgurt 60 ist als zweiseitiger Zahnriemen ausgebildet.

Der Übergabeförderer 46 wird (indirekt) durch den Zwischenförderer 23 mit angetrieben, also durch den Drehstrommotor 59. Der Antrieb vollzieht sich über ein Umlenkrad 63 des Untergurts 49. Von diesem führt ein Antrieb 64 zu einem Getriebe, nämlich Winkelgetriebe 65. Dieses wirkt über einen Antriebsriemen 66 und eine Antriebswelle 67 auf den Übergabeförderer 46. Der Übergabeförderer 46 kann so mit der Maximalgeschwindigkeit der Maschine angetrieben werden, so dass die Packungen 10 aus der sich öffnenden Tasche 29 abgefördert werden können.

Der Untergurt 49 des Zwischenförderers 23 erstreckt sich unter Umgehung des Stauförderers 24 in den Bereich der Abschubstation 25 unter Bildung des Unterförderers 53 desselben. Der Untergurt 49 ist dabei über mehrere Umlenkrollen 68 geführt.

Dem Stauförderer 24 ist ein eigenständiger Antrieb zugeordnet, nämlich ein Servoantrieb 69. Dieser ermöglicht eine Förderbewegung des Stauförderers 24 bzw. von Oberband 50 und Unterband 51 in zwei Richtungen. Der Servoantrieb 69 wirkt über Antriebsgurte auf Antriebsrollen 70, 71 vom Oberband 50 und Unterband 51.

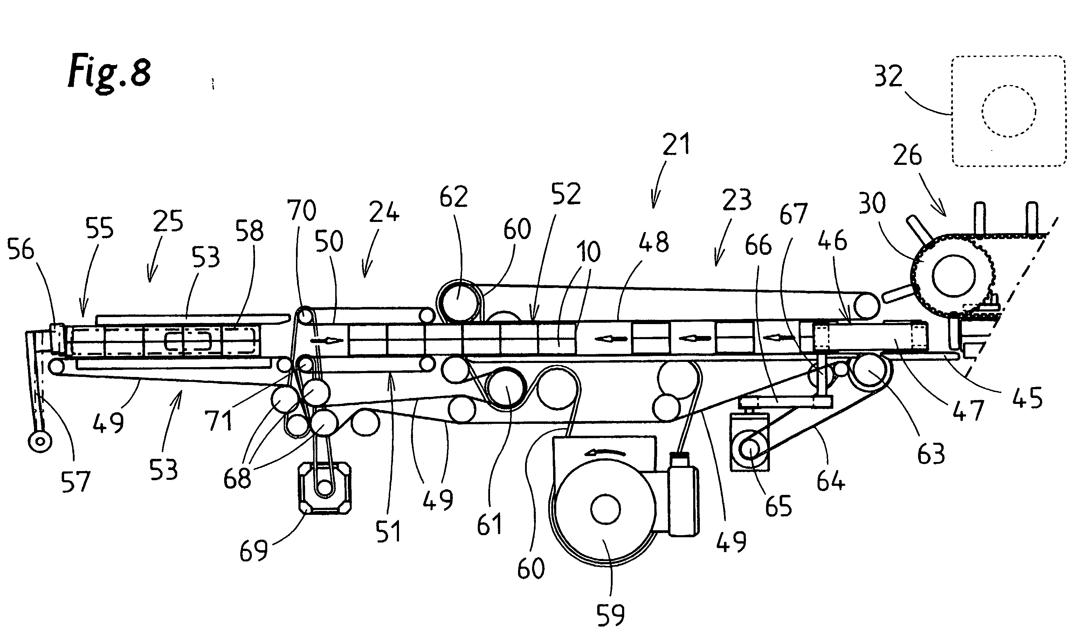

Um die beschriebene gegenläufige Bewegung des Packungsstrangs 52 zu gewährleisten, sind die Packungen 10 zwischen Oberband 50 und Unterband 51 des Stauförderers 24 mit erhöhter Haltekraft fixiert. Hingegen sind die Abstände von Obergurt 48 und Untergurt 49 des Zwischenförderers 23 so gewählt, dass der Packungsstrang 52 gegen die aufrechterhaltene Förderbewegung des Zwischenförderers 23 in dessen Bereich gelangen kann (Fig. 8). Die Oberflächen der Gurte können so ausgebildet sein, dass dieser Bewegungsablauf unterstützt wird.

Die Abmessungen können vorteilhafterweise so gewählt sein, dass der Packungsstrang 52 nach dem Absondern von der Packungsgruppe 55 um etwa 100 mm entgegen der Förderrichtung zurückbewegt wird in die Position gemäß Fig. 8. Der Bewegungshub des Endanschlags 56 kann 10 mm betragen. Der Abschub der Packungsgruppe 55 erfolgt, wenn sich der Endanschlag 56 in der zurückgezogenen Position befindet, so dass die Packungsgruppe 55 an beiden Seiten frei ist.

Die einzelnen Förderorgane der Vorrichtung können auch in einem anderen Zusammenhang in der beschriebenen Weise eingesetzt werden.

### Bezugszeichenliste:

- 10: Packung
- 11: Faltrevolver
- 12: Vorderwand
- 13: Rückwand
- 14: Seitenwand
- 15: Seitenwand
- 16: Stirnwand
- 17: Stirnwand
- 18: Siegelorgan
- 19: Packungsbahn
- 20: Aufrechtförderer
- 21: Förderstrecke
- 22: Siegelaggregat
- 23: Zwischenförderer
- 24: Stauförderer
- 25: Abschubstation
- 26: Taschenförderer
- 27: Zahnriemen
- 28: Mitnehmer
- 29: Tasche
- 30: Zahnrad
- 31: Zahnrad
- 32: Servomotor
- 33: Unterlage
- 34: Fördertrum
- 35: Siegelbacke
- 36: Siegelbacke
- 37: Siegelfläche
- 38: Siegelfläche
- 39: Ausrichter
- 40: Bahn
- 41: Bahn
- 42: Auswerfer
- 43: Schenkel
- 44: Tragschenkel
- 45: Brückenplatte
- 46: Übergabeförderer
- 47: Gurt
- 48: Obergurt
- 49: Untergurt
- 50: Oberband
- 51: Unterband
- 52: Packungsstrang
- 53: Unterförderer
- 54: Abdeckplatte
- 55: Packungsgruppe
- 56: Endanschlag
- 57: Schwenkarm
- 58: Abschieber
- 59: Drehstrommotor
- 60: Antriebsgurt
- 61: Antriebsrad
- 62: Antriebsrad
- 63: Umlenkrad
- 64: Antrieb
- 65: Winkelgetriebe
- 66: Antriebsriemen
- 67: Antriebswelle
- 68: Umlenkrolle
- 69: Servoantrieb
- 70: Antriebsrolle
- 71: Antriebsrolle

## Patentansprüche

1. Verfahren zum Handhaben von Packungen (10) bei der Herstellung von Gebindepackungen für Packungsgruppen (55), die durch Absondern von einem fortlaufenden Packungsstrang (52) aus in Dichtlage positionierten Packungen (10) gebildet werden, wobei die Packungsgruppe (55) von dem nachfolgenden Packungsstrang (52) durch Relativbewegung abgesondert wird, derart, dass zwischen der Packungsgruppe (55) und dem Packungsstrang (52) eine Lücke gebildet ist und dass die Packungsgruppe (55) sodann abgefördert, insbesondere in Querrichtung abgeschoben wird, **dadurch gekennzeichnet, dass** die Packungsgruppe (55) einerseits und der Packungsstrang (52) andererseits durch Rückbewegung des Packungsstrangs (52) entgegen der Förderbewegung in Förderrichtung auseinander bewegt werden.

2. Verfahren nach Anspruch 1, **dadurch gekennzeichnet, dass** die abzuschiebende Packungsgruppe (55) an beiden einander gegenüberliegenden Enden freiliegt, insbesondere durch Zurückbewegen eines Endanschlags (56) für die Packungsgruppe (55).

3. Verfahren nach Anspruch 1 oder einem der weiteren Ansprüche, **dadurch gekennzeichnet, dass** der entgegen der Förderrichtung zurückbewegte Packungsstrang (52) in Richtung auf die Abschubstation (25) förderbar ist, bevor ein Abschieber (58) für die Packungsgruppe (55) in die Ausgangsstellung zurückgekehrt ist.

4. Vorrichtung zum Handhaben von Packungen (10), insbesondere bei der Herstellung von Gebindepackungen für Packungsgruppen, die aus einem fortlaufenden Packungsstrang (52) durch Absondern gebildet sind, wobei Kleingruppen von Packungen (10), insbesondere jeweils zwei übereinander angeordnete Packungen (10) durch Förderer entlang einer Förderstrecke (21) bis in den Bereich eines Stauförderers (24) mit Abstand voneinander förderbar sind, wobei im Bereich des Stauförderers (24) durch entsprechende Relativbewegung der Packungsstrang (52) aus dicht aufeinanderfolgenden Packungen (10) gebildet und von diesem die Packungsgruppe (55) durch einen quer bewegbaren Abschieber (58) abförderbar ist, **dadurch gekennzeichnet, dass** ein der Abschubstation (25) vorgeordneter Förderer für die Packungen (10), insbesondere der Stauförderer (24), in zwei Richtungen antreibbar und nach Zuführung einer Packungsgruppe (55) in die Abschubstation (25) hinsichtlich der Förderrichtung des nachfolgenden Packungsstrangs (52) umkehrbar ist, derart, dass der Packungsstrang (52) unter Bildung eines Abstands von der Packungsgruppe (55) in entgegengesetzter Richtung förderbar ist.

5. Vorrichtung nach Anspruch 4, **dadurch gekennzeichnet, dass** der Packungsstrang (52) im Bereich der Abschubstation (25) gegen einen Endanschlag (56) förderbar ist, der zur Freigabe der Packungsgruppe (55) nach Positionierung derselben von dieser zurückbewegbar ist, insbesondere durch Schwenkbewegung eines Schwenkarms (57).

6. Vorrichtung nach Anspruch 4 oder einem der weiteren Ansprüche, **dadurch gekennzeichnet, dass** dem Stauförderer (24) ein weiterer Endlosförderer für die Packungen (10) vorgeordnet ist, nämlich ein Zwischenförderer (23), wobei der Zwischenförderer (23) so ausgebildet bzw. angetrieben ist, dass ein Teil des Packungsstrangs (52) bei der Rückförderbewegung durch den Stauförderer (24) in den Bereich des Zwischenförderers (23) förderbar ist entgegen der fortgesetzten Förderbewegung des Zwischenförderers (23).

7. Vorrichtung nach Anspruch 6 oder einem der weiteren Ansprüche, **dadurch gekennzeichnet, dass** der Zwischenförderer (23) und ein Unterförderer (53) im Bereich der Abschubstation (25) durch einen gemeinsamen Antrieb bewegbar sind, insbesondere durch einen ständig laufenden Drehstrommotor (59), wobei vorzugsweise ein Untergurt (49) des Zwischenförderers (23) unter Umgehung des Stauförderers (24) den Unterförderer (53) der Abschubstation (25) bildet.

8. Vorrichtung nach Anspruch 4 oder einem der weiteren Ansprüche, **dadurch gekennzeichnet, dass** der Stauförderer (24) durch einen gesonderten Antrieb antreibbar ist, insbesondere durch einen hinsichtlich der Drehrichtung umkehrbaren Servoantrieb (69).

## Claims

1. Method for handling packs (10) during the production of bundle packs for pack groups (55) which are formed by virtue of being separated off from a continuous line of packs (52) comprising packs (10) positioned in close proximity to one another, with the pack group (55) being separated off from the following line of packs (52) by relative movement so that a gap is formed between the pack group (55) and the line of packs (52), and that the pack group (55) is then conveyed away, in particular pushed off in the transverse direction., **characterized in that** the pack group (55), on one hand, and the line of packs (52), on the other hand, are moved apart from one another in the conveying direction, in particular by virtue of the line of packs (52) being moved back counter to the conveying movement.

2. Method according to Claim 1, **characterized in that** the pack group (55) which is to be pushed off is free at both mutually opposite ends, in particular by virtue of an end stop (56) for the pack group (55) being moved back.

3. Method according to Claim 1 or one of the further Claims, **characterized in that** the line of packs (52) moved back counter to the conveying direction can be conveyed in the direction of the pushing-off station (25) before a pushing-off means (58) for the pack group (55) has returned to its starting position.

4. Apparatus for handling packs (10), in particular in the production of bundle packs for pack groups that are formed by being separated from a continuous line of packs (52), it being possible for small groups of packs (10), in particular two packs (10) each arranged one above the other, to be conveyed at a distance from one another by conveyors, along a conveying section (21), into the region of an accumulating conveyor (24), it being the case that in the region of the accumulating conveyor (24), by virtue of corresponding relative movement, the line of packs (52) is formed from packs (10) which follow closely one after the other, and the pack group (55) can be conveyed away from said line of packs by a transversely displaceable pushing-off means (58), **characterized in that** a conveyor for the packs (10) which is arranged upstream of the pushing-off station (25), in particular the accumulating conveyor (24), can be driven in two directions and, once a pack group (55) has been fed into the pushing-off station (25), can be reversed in relation to the conveying direction of the following line of packs (52), such that the line of packs (52) can be conveyed in the opposite direction, a distance from the pack group (55) being formed in the process.

5. Apparatus according to Claim 4, **characterized in that** in the region of the pushing-off station (25), the line of packs (52) can be conveyed against an end stop (56) which for the purpose of releasing the pack group (55), following positioning of the same, can be moved back from this pack group, in particular by virtue of a pivoting movement of a pivot arm (57).

6. Apparatus according to Claim 4 or one of the further Claims, **characterized in that** arranged upstream of the accumulating conveyor (24) is a further endless conveyor for the packs (10), namely an intermediate conveyor (23), the intermediate conveyor (23) being designed and/or driven such that, during the backward conveying movement, part of the line of packs (52) can be conveyed by the accumulating conveyor (24) into the region of the intermediate conveyor (23) counter to the continued conveying movement of the intermediate conveyor (23).

7. Apparatus according to Claim 6 or one of the further Claims, **characterized in that** the intermediate conveyor (23) and a bottom conveyor (53) in the region of the pushing-off station (25) can be moved by a common drive, in particular by a constantly running three-phase motor (59), a bottom belt (49) of the intermediate conveyor (23) preferably forming the bottom conveyor (53) of the pushing-off station (25), the accumulating conveyor (24) being bypassed in the process.

8. Apparatus according to Claim 4 or one of the further Claims, **characterized in that** the accumulating conveyor (24) can be driven by a separate drive, in particular by a servodrive (69) which can have its direction of rotation reversed.

## Revendications

1. Procédé de manipulation de paquets (10) lors de la fabrication de paquets de groupement pour des groupes de paquets (55) qui sont formés par séparation d'une file continue (52) de paquets (10) disposés en ordre serré, le groupe de paquets (55) étant séparé de la file de paquets (52) qui suit par un mouvement relatif de façon telle qu'entre le groupe de paquets (55) et la file de paquets (52) soit formé un vide et que le groupe de paquets (55) soit ensuite évacué, en particulier ripé en direction transversale, **caractérisé par le fait que** le groupe de paquets (55) et la file de paquets (52) sont écartés l'un de l'autre par recul de la file de paquets (52) à l'opposé du mouvement de transport dans la direction de transport.

2. Procédé selon la revendication 1, **caractérisé par le fait que** le groupe de paquets (55) à riper est dégagé à ses deux extrémités opposées, en particulier par recul d'une butée (56) pour le groupe de paquets (55).

3. Procédé selon la revendication 1 ou une des autres revendications, **caractérisé par le fait que** la file de paquets (52) reculée dans la direction opposée à la direction de transport est transportée en direction du poste de ripage (25) avant qu'un ripeur (58) pour le groupe de paquets (55) soit revenu en position initiale.

4. Dispositif de manipulation de paquets (10), en particulier lors de la fabrication de paquets de groupement pour des groupes de paquets qui sont formés par séparation d'une file continue (52) de paquets, dans lequel des petits groupes de paquets (10), en particulier de deux paquets (10) superposés, sont transportés à distance les uns des autres par des transporteurs le long d'une voie de transport (21) jusque dans la zone d'un transporteur d'accumulation (24), dans la zone du transporteur d'accumulation (24), la file (52) de paquets (10) se suivant en ordre serré est formée par un mouvement relatif approprié et le groupe de paquets (55) est évacué de la file (52) par un ripeur (58) mû transversalement, **caractérisé par le fait qu'**un transporteur pour les paquets (10) qui précède le poste de ripage (25), en particulier le transporteur d'accumulation (24), peut être entraîné dans deux directions, et après amenée d'un groupe de paquets (55) au poste de ripage (25), la marche de ce transporteur est renversée en ce qui concerne la direction de transport de la file de paquets (52) qui suit, de façon telle la file de paquets (52) soit transportée dans la direction opposée en étant écartée du groupe de paquets (55).

5. Dispositif selon la revendication 4, **caractérisé par le fait que** la file de paquets (52) est, dans la zone du poste de ripage (25), amenée contre une butée (56) qui, pour le dégagement du groupe de paquets (55), est, après positionnement de celui-ci, reculée de celui-ci, en particulier par basculement d'un levier basculant (57).

6. Dispositif selon la revendication 4 ou une des autres revendications, **caractérisé par le fait que** le transporteur d'accumulation (24) est précédé d'un autre transporteur sans fin pour les paquets (10), à savoir d'un transporteur intermédiaire (23), ce transporteur intermédiaire (23) étant conçu ou entraîné de façon qu'une partie de la file de paquets (52) soit, lors du mouvement de transport en arrière, amenée par le transporteur d'accumulation (24) dans la zone du transporteur intermédiaire (23) à l'opposé du mouvement continu de transport intermédiaire (23).

7. Dispositif selon la revendication 8 ou une des autres revendications, **caractérisé par le fait que** le transporteur intermédiaire (23) et un transporteur inférieur (53) sont mus dans la zone du poste de ripage (25) par un dispositif d'entraînement commun, en particulier par un moteur à courant triphasé (59) tournant en permanence, et de préférence, une courroie inférieure (49) du transporteur intermédiaire (23) forme, en contournant le transporteur d'accumulation (24), le transporteur inférieur (53) du poste de ripage (25).

8. Dispositif selon la revendication 4 ou une des autres revendications, **caractérisé par le fait que** le transporteur d'accumulation (24) est entraîné par un dispositif d'entraînement séparé, en particulier par un dispositif d'entraînement asservi à sens de rotation réversible (69).
